# EUROPEAN PATENT SPECIFICATION

(11) **EP 1 661 192 B1**
(45) Date of publication and mention of the grant of the patent: **10.12.2008**
(21) Application number: 04745223.0
(22) Date of filing: 22.07.2004
(51) Int. Cl.: H01M 2/04, H01M 2/12, H01M 2/36

(54) **COVER FOR ELECTRIC ACCUMULATOR WITH FREE ELECTROLYTE AND RELATIVE ACCUMULATOR**
ABDECKUNG FÜR EINEN ELEKTRISCHEN AKKUMULATOR MIT FREIEM ELEKTROLYT UND RELATIVER AKKUMULATOR
COUVERCLE POUR ACCUMULATEUR ELECTRIQUE A ELECTROLYTE LIBRE ET ACCUMULATEUR

(30) Priority: 24.07.2003 IT VI20030146
(43) Date of publication of application: 31.05.2006
(73) Proprietor: Stocchiero, Franco, 36050 Montorso Vicentino (IT)
(72) Inventor: Stocchiero, Franco, 36050 Montorso Vicentino (IT)
(74) Representative: Terreran, Gabrio
(86) International application number: PCT/IT2004/000400
(87) International publication number: WO 2005/011022

(56) References cited:
- EP-A- 1 298 739
- GB-A- 1 194 215
- GB-A- 1 285 166
- US-A- 3 471 339
- US-A- 4 207 387

## Description

The invention concerns a cover for an electric accumulator particularly adapted to be used in lead accumulators of the type with free electrolyte and the relative electric accumulator.

Covers for electric accumulators of the kind disclosed in the present application are known from EP-A-1298739, along with electric accumulators implementing said covers.

As known the casing of a lead electric accumulator of the type with free electrolyte, like for example those intended for starting up thermal motors, substantially consists of a cover that closes a container provided on the inside with a plurality of dividing walls.

Such dividing walls define the cells inside which the plate groups of positive and negative polarity are arranged, completely immersed in the electrolyte, consisting of a diluted aqueous solution of sulphuric acid.

The plates, as known, are the seats where the charging and discharging reactions of the accumulator take place.

The cover is provided with a plurality of topping up holes, which can be closed by corresponding sealing caps, which allow the supply or the topping up of the electrolyte in each cell.

As known, the electrochemical processes that occur inside each cell during charging determine the separation by electrolysis of water with the consequent development of its constituent elements, hydrogen and oxygen.

These are disposed of through the single caps, which in such a case are provided with a suitable vent hole, or else through a discharge channel that, through as many inlet mouths, collects the gases developed in each cell and conveys them towards a single outlet mouth communicating with the external environment.

The discharge channel is realised in the cover and the inlet mouths that collect the gases from the single cells are arranged above the free surface defined in each cell by the electrolyte.

To avoid accidental burning of the hydrogen coming out from the accumulator caused by external agents, such as sparks or naked flames, being able to penetrate inside the accumulator causing it to explode, the prior art foresees that an anti-explosion device be arranged close to the outlet mouth.

Such a device generally consists of a porous partition of ceramic or plastic material adapted to allow the passage of the gases emitted by the accumulator and at the same time to protect the accumulator against the risk of explosion.

A first drawback of lead accumulators with free electrolyte consists of the fact that they are exposed to the risk of losses of electrolyte. This may occur, for example, due to bad manoeuvring during transportation or due to an accident that has occurred to the means in which the accumulator is installed. It is clear that such a drawback can easily occur when the accumulator becomes arranged in a tilted or upside down position.

In such a situation, indeed, the electrolyte present in the cells reaches the inlet mouths of the discharge channel of the gases pushing up to the outlet mouth.

To at least partially overcome such drawbacks the prior art has proposed accumulators that inside the discharge duct have winding labyrinth paths that lengthen the discharge channel.

Such winding paths obstruct the progression of the electrolyte towards the outlet mouth and promote the condensation of the electrolyte mists carried by the gases emitted by the accumulator promoting its re-entry into each cell.

They are defined by vertical walls arranged in a suitable manner with respect to each other inside the discharge channel.

A first drawback of the described solution consists of the fact that it does not allow the loss of electrolyte to be avoided but just allows its leakage to be delayed.

Such a drawback becomes ever more serious considering the tests and examinations that the accumulator must pass to respect the relative safety regulations and to be able to be desirable on the market.

Indeed, the tendency is to demand accumulators with free electrolyte that can operate or be recharged in the undesired positions described above for increasingly long time periods, without having losses of electrolyte.

In particular some tests foresee that the accumulator must remain upside down for a few minutes without having losses of electrolyte ensuring its correct operation both during and after the test.

Another drawback consists of the fact that the electrolyte that has leaked from a cell mixes inside the discharge channel with the electrolyte leaked from the other cells.

Another drawback linked to the previous one consists of the fact that the electrolyte present inside the discharge channel re-enters in random amounts inside each cell thus determining different levels of electrolyte in the various cells. This determines non-optimal working conditions for the accumulator that cause losses of efficiency of the accumulator itself and sometimes even its irreparable damage.

A further drawback consist of the fact that the vapours and the gases that do not condense are discharged to the outside contributing to lowering the level of electrolyte in the cells. This determines a worsening of the performance of the accumulator and a progressive damaging of the plates.

A further drawback consists of the fact that the level of electrolyte in each cell, which lowers for the aforementioned causes, must be periodically checked and hastily restored through onerous maintenance interventions.

Another drawback consists of the fact that such maintenance interventions must be carried out with a certain frequency.

The purpose of the present invention is to overcome said drawbacks.

In particular, a first purpose of the invention is to realise a cover for an electric accumulator with free electrolyte and a relative accumulator that does not have losses of electrolyte even if placed in critical positions.

Another purpose is to realise a cover and a relative accumulator that can operate to charge and discharge in the undesired positions described above even for considerable time periods, without having losses of electrolyte.

A further purpose is to realise a cover and an accumulator that have all of the necessary safety characteristics required by current standards and regulations.

Another purpose of the invention is to realise a cover and an accumulator that maintain their efficiency even after having taken up positions not suitable for its perfect operation without the need for corrective interventions.

A further purpose is to realise a cover and an accumulator that keep the level of electrolyte inside each cell substantially constant, even after having taken up positions different to those foreseen in normal operation.

Another purpose is to realise a cover and an accumulator that require less maintenance interventions per unit time with respect to comparable known accumulators.

The last but not least purpose is to realise an accumulator that is cost-effective and simple to realise.

Said purposes are accomplished by a cover for an electric accumulator of the type with free electrolyte in accordance with the main claim.

In the same way, said purposes and advantages are accomplished by an electric accumulator of the type with free electrolyte in accordance with the corresponding claims.

Advantageously, the proposed solution allows the gases that develop inside the accumulator to be vented when they exceed a certain pressure and at the same time allows the leaking of the electrolyte to be avoided in the case of anomalous positioning of the accumulator.

Said purposes and advantages shall become clearer during the description of some preferred embodiments, given for indicating and not limiting purposes, with reference to the attached tables of drawings, where:
- figure 1 represents a partially sectioned axonometric view of a cover for electric accumulators with free electrolyte object of the present invention, installed on an accumulator also object of the present invention;
- figure 2 represents a plan view of the cover and of the accumulator of figure 1;
- figure 3 represents a side view of a partial section along the plane A-A of the cover and of the accumulator of figure 2;
- figure 4 represents a side view of a partial section along the plane B-B of the cover and of the accumulator of figure 2;
- figure 5 represents an axonometric view of a variant embodiment of the cover and of the relative accumulator of figure 1;
- figure 6 represents a side view of a partial section of the cover and of the accumulator of figure 5 along a plane A-A analogous to that of figure 2;
- figure 7 represents another side view of a partial section of a variant embodiment of the cover and of the accumulator of figure 5;
- figure 8 represents another side view of a partial section of another variant embodiment of the cover and of the relative accumulator of figure 5;
- figure 9 represents an axonometric view of a variant embodiment of the cover and of the accumulator of figure 5;
- figure 10 represents a plan view of the cover and of the accumulator of figure 9;
- figure 11 represents a side view of a partial section along the plane A-A of the cover and of the relative accumulator of figure 9;
- figure 12 represents a side view of a partial section along the plane B-B of the cover and of the accumulator of figure 9;
- figure 13 represents an axonometric view of a variant embodiment of the cover and of the relative accumulator of figure 1;
- figure 14 represents a side view of a partial section along the plane B-B of the cover and of the accumulator of figure 9 upside down;
- figure 15 represents a side view of a partial section along the plane A-A of the cover and of the accumulator of figure 9 upside down;
- figure 16 represents a side view of a partial section along the plane A-A of the cover and of the accumulator of figure 9 in working position, after having been turned upside down;
- figure 17 represents a side view of a partial section along the plane B-B of the cover and of the accumulator of figure 9 in working position, after having been turned upside down.

Although the described embodiments refer to particular lead accumulators with free acid, it is clear that the proposed solution can also be applied to other forms of accumulators with free electrolyte.

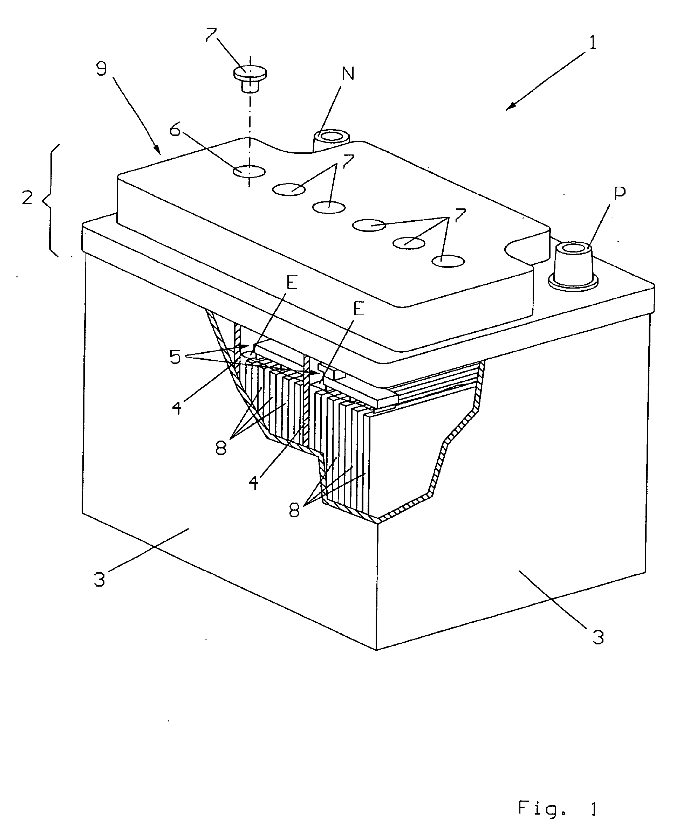

The cover for an electric accumulator of the type with free acid and the relative accumulator, object of the present invention are represented in figure 1, where they are wholly indicated with reference numerals 2 and 1, respectively.

The electric accumulator 1 substantially comprises the cover 2 that closes a container 3 at the top, provided on the inside with a plurality of vertical dividing walls 4 that define the cells 5 of the accumulator 1.

The cover 2 is provided with a plurality of inspection and topping up holes 6 of the cells 5, which can be closed through as many closing caps 7.

Each cell 5 is adapted to connect the electrolyte E and to house the groups of plates 8 electrically connected together so as to form the positive P and negative N polar terminals of the accumulator 1.

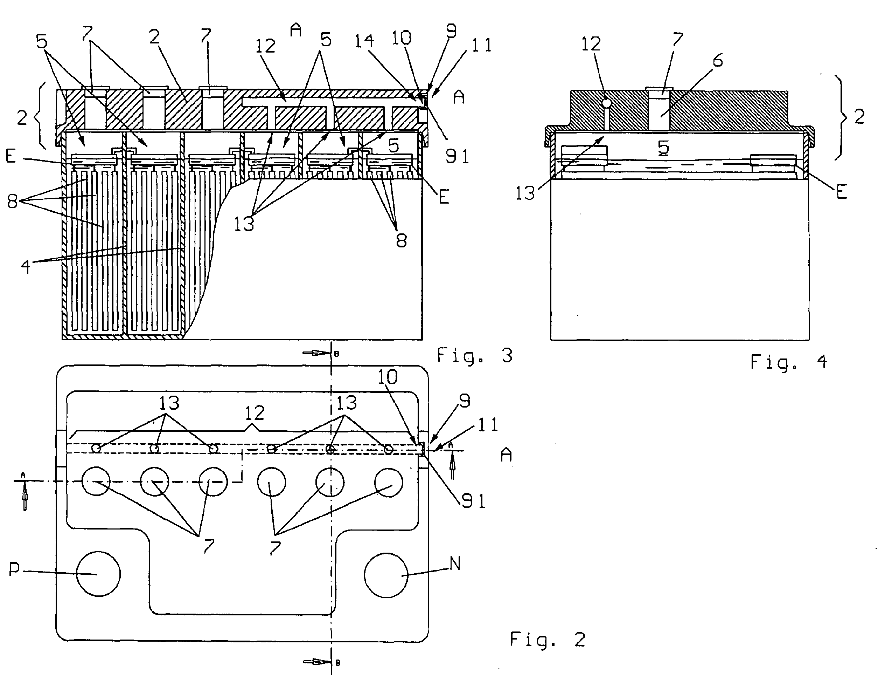

The invention foresees that the cover 2 comprises a valve device, wholly indicated with reference numeral 9, visible in detail in figures 2 to 4, having an inlet 10 that communicates with the cells 5 and an outlet 11 communicating with the external environment A, to prevent the leaking of electrolyte E and to allow the disposal to the outside of the gases that develop inside the accumulator 1 when the pressure in one of the cells 5 exceeds a predetermined value.

In particular, the valve device 9 communicates with each cell 5 through a discharge channel 12.

Such a channel 12 has many inlet mouths 13, each communicating with one of the cells 5 and an outlet mouth 14, communicating with the inlet 10 of the valve device 9.

The valve device 9 prevents, as shall be seen more clearly hereafter, the leaking of electrolyte E both in normal operating conditions and in the critical conditions described above, whilst still keeping the pressure of the gases present inside each cell 5 under control.

The element 9 in the example consists of a unidirectional over-pressure valve 91 that intervenes when the internal pressure value of the accumulator 1 exceeds a predetermined value.

Such a predetermined value is greater or rather not less than the pressure exerted by the electrolyte head E on the inlet 10 of the element 9 when the accumulator 1 is arranged upside down.

This allows it to be ensured that even in such a position the electrolyte E does not leak from the accumulator 1.

In the described embodiment the element 9 comprises a tubular body closed by a base, removably coupled with a tubular collar realised in the cover close to an end of the discharge channel 12

As far as the discharge channel 12 is concerned, it is formed in the cover 2 of the accumulator 1 during the realisation of the cover itself.

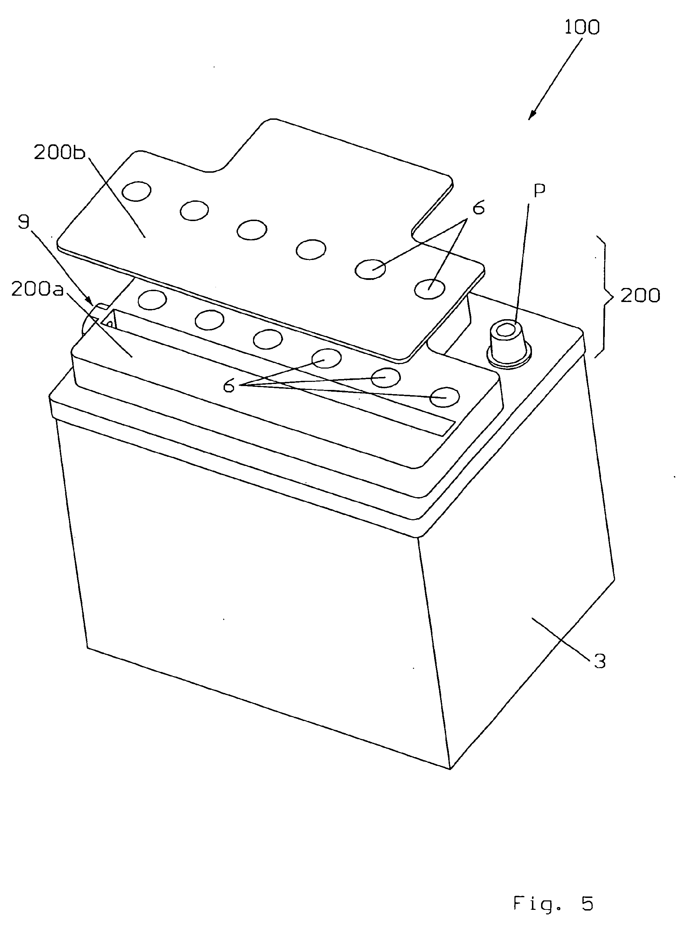

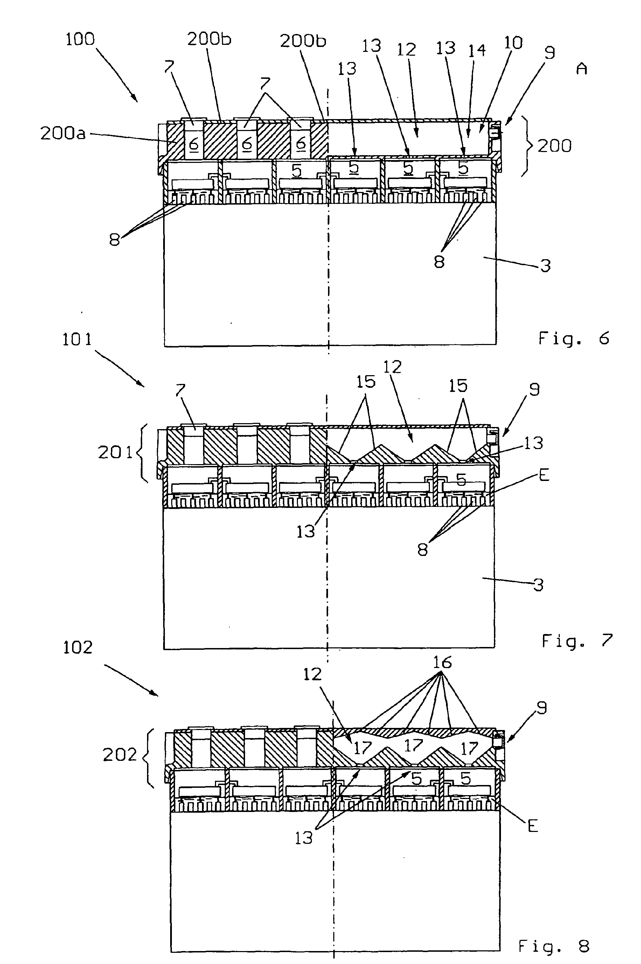

A variant embodiment of the cover and of the accumulator wholly indicated with reference numeral 200 and 100 in figures 5 and 6, differs from the previous one in that the cover 200 comprises a main body 200a and a closing element of the discharge channel 12 consisting of a foil 200b.

This allows the mould used to realise the cover 200 and its elements 200a and 200b to be simplified.

Another variant embodiment of the cover and of the accumulator wholly indicated with reference numeral 201 and 101 in figure 7 differs from the previous one in that the lower surface of the discharge channel 12 has many tilted planes 15, each converging towards one of the inlet mouths 13 to ease the re-entry of the electrolyte E into the cells 5.

A further variant embodiment of the cover and of the accumulator wholly indicated with 202 and 102 in figure 8, differs from the previous one in that the upper surface of the discharge channel 12 also has tilted planes 16, substantially mirroring the previous ones.

The interfacing tilted planes 15 and 16 in pairs define a series of first tanks 17 communicating with each other and suitable, as shall be better described hereafter, for further holding the electrolyte E that might leak from the respective cells 5 allowing its re-entry.

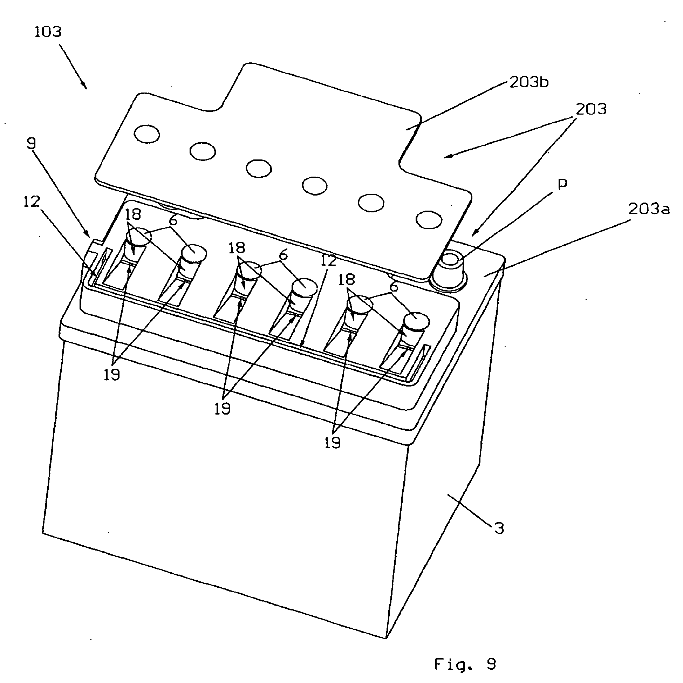

Another variant embodiment of the cover and of the accumulator wholly indicated with reference numeral 203 and 103 in figures 9 to 12, differs from the previous one in that each inlet mouth 13 of the discharge channel 12 does not communicate directly with a respective cell 5.

More specifically, each inlet mouth 13 communicates with as many accumulation chambers 18, each in turn communicating with a respective cell 5 through a vent channel 19.

Each accumulation chamber 18 is formed on the main body 203a of the cover 203 and is closed at the top by the closing element 203b.

In the same way as the discharge channel 12, both the lower surface and the upper surface of the accumulation chamber 18 have tilted planes, respectively indicated with 20 and 21, substantially mirroring each other and converging towards the vent channel 19 to ease the re-entry of the electrolyte E into the corresponding cell 5.

The interfacing tilted planes 20 and 21 also defme a series of first tanks 22, communicating with each other and suitable, as shall be seen more clearly hereafter, for further holding the electrolyte E to prevent it from mixing and to ease its return into the corresponding cell 5.

Another variant embodiment that has not been represented differs from the previous one in that each cell 5 is provided with its own valve device 9 arranged in the cover.

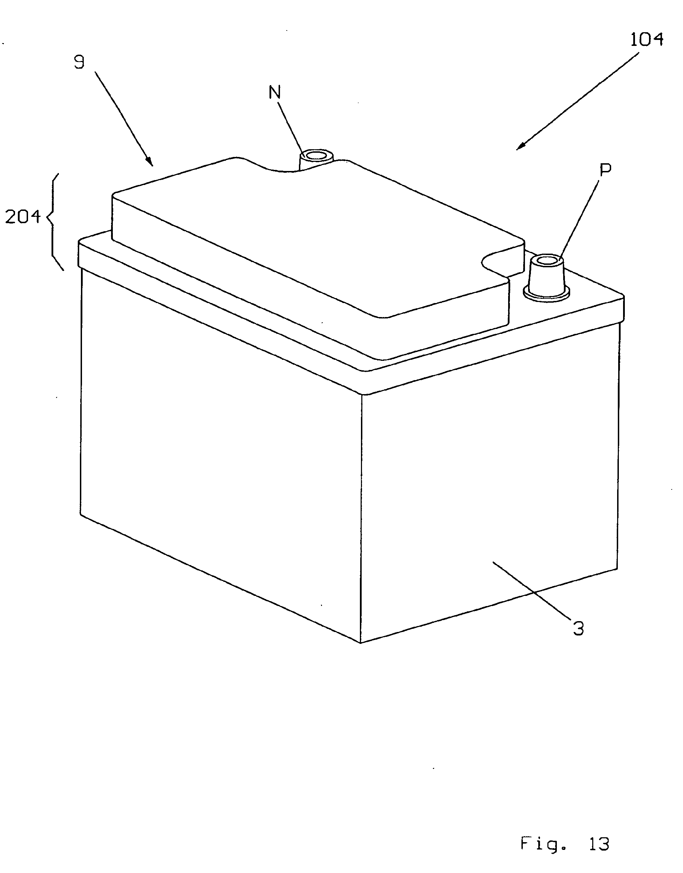

A further variant embodiment of the cover and of the accumulator wholly indicated with reference numeral 204 and 104 in figure 13, differs from the previous one in that the cover 204 does not have the topping up holes and the relative closing caps.

The description of the operation of the proposed accumulator shall now be made with reference to the variant embodiment represented in detail in figures 9 to 14.

The assembly of the accumulator 103 foresees welding the plate groups 8 together with the corresponding separators and inserting them inside the respective cells 5.

Once the elements have been connected together and the main body 203a has been welded to the container, with heat sealing or equivalent procedures, the polar terminals P and N are welded.

Then one proceeds to the formation process of the plates with known methods filling each cell 5 with the formation electrolyte.

Having completed the formation process one proceeds to the application of the closing foil 203b with heat sealing or equivalent processes.

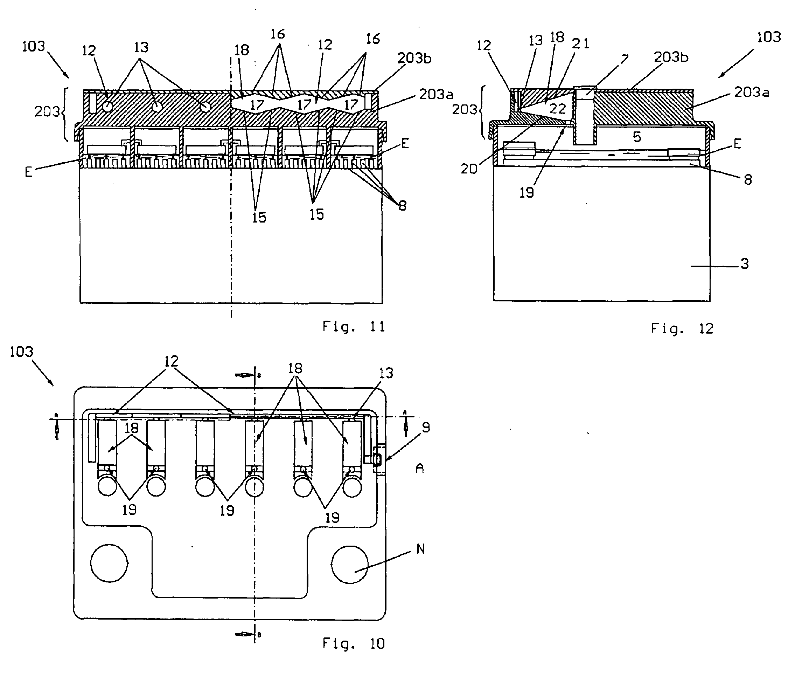

At the end of such operations the levels of electrolyte and of topping up liquid are those represented in figures 11 and 12.

When inside the accumulator, due to its charging, the aforementioned gases develop, these cause an increase in pressure inside a cell 5 that is detected by the valve device 9. As soon as such a pressure value exceeds the predefined threshold, the valve device 9 places the inside of the cells 5 in communication with the environment A, thus allowing the disposal or discharge of the gases.

In the case of the accumulator 103 turning upside down, the air present inside the discharge channel 12 and the accumulation chamber 18, not being able to be discharged in the external environment, thanks to the presence of the valve device 9, does not allow the electrolyte to leak from the cell 5.

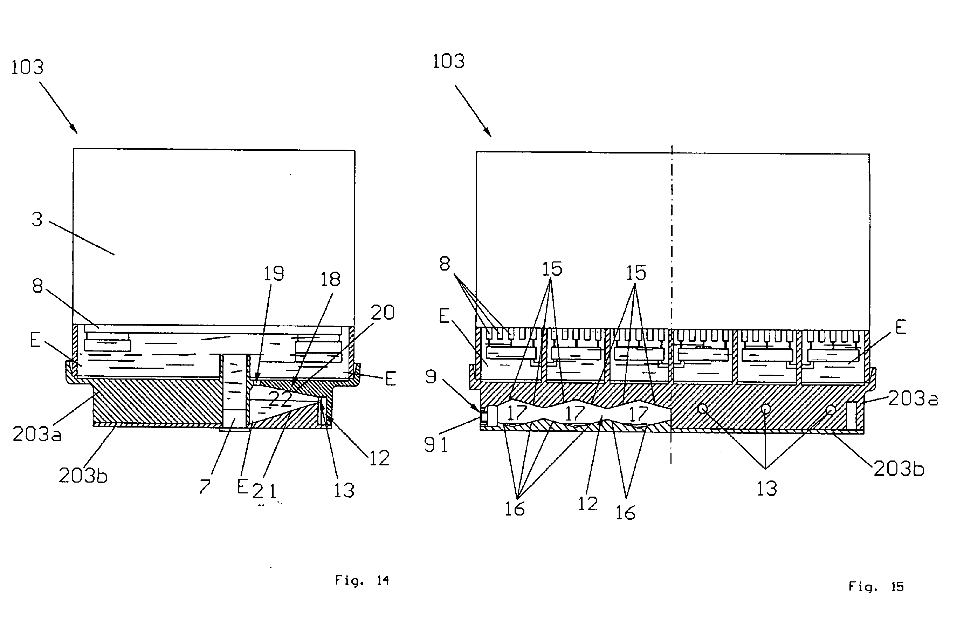

Only if there is a pressure increase inside the accumulator 103 placed in such a position, as represented in detail in figures 14 and 15, could the electrolyte leak from the cells 5.

In such a case the electrolyte E firstly pours back into the accumulation chambers 18 gradually filling up the corresponding tanks 22 and than reaches the discharge channel 12 through the inlet mouths 13 thus filling the second tanks 17.

Only once the tanks 17 have been filled does the electrolyte E coming from the various cells 5 mix.

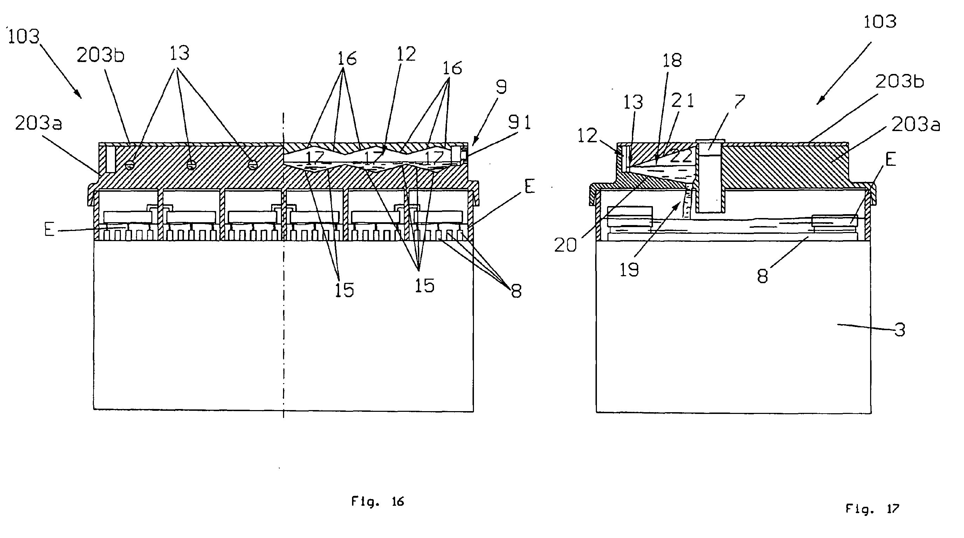

The presence of the tilted planes 15 and 16 also ensures that, once the accumulator has been taken back into working position, the electrolyte E present in the channel 12, as represented in figures 16 and 17, is conveyed in substantially equal amounts towards the accumulation chambers 18.

Finally, the planes 20 take the electrolyte E back into each cell 5.

From that which has been stated it is clear how the proposed solution allows a cover for accumulators with free electrolyte and relative accumulators to be realised that accomplish said purposes.

The proposed solution also allows the losses of electrolyte due to the carrying of acid mists outside of the accumulator by the gases that develop in charging to be eliminated.

Indeed, the valve device 9, cooperating with the labyrinth realised in the discharge channel 12 and with the accumulation chambers 18, promotes the condensation of the gases and of the vapours that develop inside the cells.

It should also be noted that the proposed cover and accumulators can be realised in sizes conforming to the standards relative to accumulators for uses in starting or light traction.

It should be noted that both the discharge channel and the accumulation chambers can also be partially formed in the container 3.

Although the invention has been described with reference to the attached tables of drawings, it can undergo modifications in the embodiment step, all of which are covered by the same inventive concept expressed by the claims shown hereafter and therefore protected by the present patent.

## Claims

1. Cover (2, 200, 201, 203, 204) for an electric accumulator (1, 100, 101, 102, 103, 104) of the type with free electrolyte adapted to be integral with the container (3) of said accumulator (1, 100, 101, 102, 103, 104) said cover comprising at least one valve device (9) having an inlet (10) communicating with one or more cells (5) of said accumulator and an outlet (11) communicating with the external environment (A), said valve device being adapted to prevent the leaking of electrolyte (E) present in said one or more cells (5) and to allow the disposal to the outside of the gases that develop inside said accumulator (1, 100, 101, 102, 103, 104) when the pressure in said one or more cells (5) exceeds a predetermined value;
said valve device (9) communicating with said one or more cells (5) through at least one discharge channel (12) having at least one inlet mouth (13) communicating with said one or more cells (5) and at least one outlet mouth (14) communicating with said inlet (10);
**characterised in that** said at least one inlet mouth (13) communicates with said one or more cells (5) through at least one accumulation chamber (18) each communicating with one of said one or more cells (5) through at least one vent channel (19).

2. Cover (203) according to claim 1) **characterised in that** the lower surface of said accumulation chamber (18) has one or more tilted planes (20) converging towards said at least one vent channel (19) to ease the re-entry of the electrolyte (E) into the corresponding cell (5).

3. Cover (203) according to claim 2) **characterised in that** the upper surface of said accumulation chamber (18) has one or more upper tilted planes (21) that define second tanks (22) adapted to further hold said electrolyte (E).

4. Cover (201, 202, 203) according to one of claims 1) to 3) **characterised in that** the lower surface of said at least one discharge channel (12) has one or more tilted planes (15) converging towards said at least one inlet mouth (13) to ease the re-entry of the electrolyte (E) into said one or more cells (5) and to equally distribute the electrolyte (E) present in said at least one discharge channel (12) between said one or more cells (5).

5. Cover (202, 203) according to claim 4, **characterised in that** the upper surface of said discharge channel (12) has one or more tilted planes (16) that define first tanks (17) communicating with each other.

6. Cover (204) according to claim 1) **characterised in that** each of said one or more cells (5) is provided with at least one valve device (9).

7. Cover (2, 200, 201, 202, 203, 204) according to any one of the previous claims **characterised in that** said at least one valve device (9) is an over-pressure valve.

8. Cover (2, 200, 201, 203, 204) according to any one of the previous claims
**characterised in that** said predetermined over-pressure value is not less than the pressure exerted by the head of said electrolyte (E) on said inlet (10) when said accumulator (1, 100, 101, 102, 103, 104) is arranged upside down.

9. Electric accumulator (1, 100, 101, 102, 103, 104) of the type with free electrolyte comprising:
- a container (3) provided on the inside with at least one cell (5) adapted to house the plate groups (8) of said accumulator (1, 100, 101, 102, 103, 104) and to contain the electrolyte (E);
- at least one cover (2, 200, 201, 203, 204) adapted to close said container (3);
**characterised in that** said at least one cover (2, 200, 201, 203, 204) is realised according to any one of claims 1) to 8).

## Patentansprüche

1. Deckel (2, 200, 201, 202, 203, 204) für einen elektrischen Akkumulator (1, 100, 101, 102, 103, 104) von jenem Typ, der einen freien Elektrolyten aufweist, und der dazu geeignet ist, mit dem Behälter (3) des Akkumulators (1, 100, 101, 102, 103, 104) integriert zu sein, wobei der Deckel zumindest eine Ventilvorrichtung (9) mit einem Einlass (10), der mit einer oder mehreren Zellen (5) des Akkumulators kommuniziert, und mit einem Auslass (11), der mit der Außenumgebung (A) kommuniziert, umfasst, wobei die Ventilvorrichtung dazu geeignet ist, ein Auslaufen des Elektrolyten (E), der in der einen oder den mehreren Zellen (5) gegenwärtig ist, zu verhindern und den Ausstoß nach außen von Gasen, die sich im Inneren des Akkumulators (1, 100, 101, 102, 103, 104) entwickeln, zu ermöglichen, wenn der Druck in der einen oder den mehreren Zellen (5) einen vorbestimmten Wert überschreitet;
wobei die Ventilvorrichtung (9) mit der einen oder den mehreren Zellen (5) über zumindest eine Abführleitung (12) kommuniziert, die zumindest eine Einlassöffnung (13), die mit der einen oder den mehreren Zellen (5) kommuniziert, und eine Auslassöffnung (14), die mit dem Einlass (10) kommuniziert, aufweist;
**dadurch gekennzeichnet, dass** die zumindest eine Einlassöffnung (13) mit der einen oder den mehreren Zellen (5) über zumindest eine Akkumulationskammer (18) kommuniziert, die jeweils mit einer der einen oder der mehreren Zellen (5) über zumindest eine Lüftungsleitung (19) kommuniziert.

2. Deckel (203) nach Anspruch 1), **dadurch gekennzeichnet, dass** die untere Oberfläche der Akkumulationskammer (18) eine oder mehrere schiefe Ebenen (20) aufweist, die zum zumindest einen Lüftungskanal (19) hin zusammenlaufen, um den Wiedereintritt des Elektrolyten (E) in die entsprechende Zelle (5) zu erleichtern.

3. Deckel (203) nach Anspruch 2), **dadurch gekennzeichnet, dass** die obere Oberfläche der Akkumulationskammer (18) eine oder mehrere schiefe Ebenen (21) aufweist, die zweite Tanks (22) definieren, die dazu geeignet sind, den Elektrolyten (E) weiter zu speichern.

4. Deckel (201, 202, 203) nach einem der Ansprüche 1) bis 3), **dadurch gekennzeichnet, dass** die untere Oberfläche der zumindest einen Abführleitung (12) eine oder mehrere schiefe Ebenen (15) aufweist, die zur zumindest einen Einlassöffnung (13) hin zusammenlaufen, um den Wiedereintritt des Elektrolyten (E) in die eine oder die mehreren Zellen (5) zu erleichtern und den Elektrolyten (E), der in der zumindest einen Abführleitung (12) gegenwärtig ist, auf die eine oder die mehreren Zellen (5) gleichmäßig zu verteilen.

5. Deckel (202, 203) nach Anspruch 4), **dadurch gekennzeichnet, dass** die obere Oberfläche der Abführleitung (12) eine oder mehrere schiefe Ebenen (16) aufweist, die erste Tanks (17) definieren, die miteinander kommunizieren.

6. Deckel (204) nach Anspruch 1), **dadurch gekennzeichnet, dass** jede der einen oder der mehreren Zellen (5) mit zumindest einer Ventilvorrichtung (9) ausgestattet ist.

7. Deckel (2, 200, 201, 202, 203, 204) nach einem der vorangegangenen Ansprüche, **dadurch gekennzeichnet, dass** die zumindest eine Ventilvorrichtung (9) ein Überdruckventil ist.

8. Deckel (2, 200, 201, 202, 203, 204) nach einem der vorangegangenen Ansprüche, **dadurch gekennzeichnet, dass** der vorbestimmte Überdruckwert nicht niedriger ist als der Druck, der von der Grenzfläche des Elektrolyten (E) auf den Einlass (10) ausgeübt wird, wenn der Akkumulator (1, 100, 101, 102, 103, 104) auf den Kopf gestellt wird.

9. Elektrischer Akkumulator (1, 100, 101, 102, 103, 104) von jenem Typ, der einen freien Elektrolyten aufweist, umfassend:
- einen Behälter (3), der im Inneren mit zumindest einer Zelle (5) ausgestattet ist, die dazu geeignet ist, die Plattensätze (8) des Akkumulators (1, 100, 101, 102, 103, 104) aufzunehmen und den Elektrolyten (E) zu enthalten;
- zumindest einen Deckel (2, 200, 201, 202, 203, 204), der dazu geeignet ist, den Behälter (3) zu verschließen;
**dadurch gekennzeichnet, dass** der zumindest eine Deckel (2, 200, 201, 202, 203, 204) nach einem der Ansprüche 1) bis 8) ausgebildet ist.

## Revendications

1. Couvercle (2, 200, 201, 203, 204) pour un accumulateur électrique (1, 100, 101, 102, 103, 104) du type avec électrolyte libre indiqué pour être solidaire du boîtier (3) dudit accumulateur (1, 100, 101, 102, 103, 104), ledit couvercle comprenant au moins un dispositif de soupape (9) présentant une entrée (10) qui communique avec un ou plusieurs éléments (5) dudit accumulateur et une sortie (11) qui communique avec l'environnement extérieur (A), ledit dispositif de soupape étant indiqué pour empêcher la fuite d'électrolyte (E) présent dans ledit un ou plusieurs éléments (5) et pour permettre l'élimination à l'extérieur des gaz qui se développent à l'intérieur dudit accumulateur (1, 100, 101, 102, 103, 104) quand la pression dans ledit un ou plusieurs éléments (5) dépasse une valeur prédéterminée ;
ledit dispositif de soupape (9) communiquant avec un ou plusieurs éléments (5) à travers au moins un canal de vidange (12) ayant au moins une bouche d'entrée (13) communiquant avec ledit un ou plusieurs éléments (5) et au moins une bouche de sortie (14) communiquant avec ladite entrée (10) ;
**caractérisé en ce que** ladite au moins une bouche d'entrée (13) communique avec ledit un ou plusieurs éléments (5) à travers au moins une chambre d'accumulation (18) chacune communiquant avec un desdits un ou plusieurs éléments (5) à travers au moins un canal d'évent (19).

2. Couvercle (203) selon la revendication 1) **caractérisé en ce que** la surface inférieure de ladite chambre d'accumulation (18) présente un ou plusieurs plans inclinés (20) convergeant vers ledit au moins un canal d'évent (19) pour faciliter la rentrée de l'électrolyte (E) dans l'élément correspondant (5).

3. Couvercle (203) selon la revendication 2) **caractérisé en ce que** la surface supérieure de ladite chambre d'accumulation (18) présente un ou plusieurs plans inclinés supérieurs (21) qui définissent de deuxièmes réservoirs (22) indiqués pour contenir ultérieurement ledit électrolyte (E).

4. Couvercle (201, 202, 203) selon l'une des revendications de 1) à 3) **caractérisé en ce que** la surface inférieure dudit au moins un canal de vidange (12) présente un ou plusieurs plans inclinés (15) convergeant vers ladite au moins une bouche d'entrée (13) pour faciliter la rentrée de l'éléctrolyte (E) dans ledit un ou plusieurs éléments (5) et pour distribuer en parts égales l'électrolyte (E) présent dans ledit au moins un canal de vidange (12) entre ledit un ou plusieurs éléments (5).

5. Couvercle (202, 203) selon la revendication 4) **caractérisé en ce que** la surface supérieure dudit canal de vidange (12) présente un ou plusieurs plans inclinés (16) qui définissent de premiers réservoirs (17) communiquant entre eux.

6. Couvercle (204) selon la revendication 1) **caractérisé en ce que** chacun desdits un ou plusieurs éléments (5) est doté d'au moins un dispositif de soupape (9).

7. Couvercle (2, 200, 201, 202, 203, 204) selon l'une quelconque des revendications précédentes **caractérisé en ce que** ledit au moins un dispositif de soupape (9) est une vanne de surpression.

8. Couvercle (2, 200, 201, 203, 204) selon l'une quelconque des revendications précédentes **caractérisé en ce que** ladite valeur de surpression prédéterminée n'est pas inférieure à la pression exercée par la charge dudit électrolyte (E) sur ladite entrée (10) quand ledit accumulateur (1, 100, 101, 102, 103, 104) se trouve en position inversée.

9. Accumulateur électrique (1, 100, 101, 102, 103, 104) du type avec électrolyte libre comprenant :
un boîtier (3) se trouvant à l'intérieur avec au moins un élément (5) indiqué pour loger les groupes de plaques (8) dudit accumulateur (1, 100, 101, 102, 103, 104) et pour contenir l'électrolyte (E) ;
au moins un couvercle (2, 200, 201, 203, 204) indiqué pour fermer ledit boîtier (3) ;
**caractérisé en ce que** ledit au moins un couvercle (2, 200, 201, 203, 204) est réalisé selon l'une quelconque des revendications de 1) à 8).
